# EUROPÄISCHE PATENTANMELDUNG

(11) **EP 1 285 820 A1**
(43) Veröffentlichungstag der Anmeldung: **26.02.2003**
(21) Anmeldenummer: 02013362.5
(22) Anmeldetag: 19.06.2002
(51) Int. Cl.: B60R 21/16

(54) **Airbagschutzhülle**

(30) Priorität: 09.08.2001 DE 10139227
(71) Anmelder: Firma Carl Freudenberg, 69469 Weinheim (DE)
(72) Erfinder: Schuster, Matthias, Dr., 69518 Abtsteinach (DE); Wilhelm, Volker, Dr., 64653 Lorsch (DE)

(57) **Zusammenfassung**

Airbagschutzhülle aus einem Endlosfilament-Vliesstoff aus Polyester mit Flächengewichten von 60 bis 200 g/m², wobei der Vliesstoff aus schmelzgesponnenen, verstreckten und unmittelbar zu einem Vlies abgelegten Endlosfilamenten mit einem Faser-Titer von 1,5 bis 5 dtex, vorzugsweise von 2,4 bis 3 dtex, besteht, und nach seiner Ablage einer Verfestigung durch Hochdruck-Wasserstrahlen gegebenenfalls mit einer Vorverfestigung unterworfen wurde.

## Beschreibung

Die Erfindung betrifft eine Airbagschutzhülle, bestehend aus einem Vliesstoff mit Flächengewichten von 60 bis 200 g/m².

Aus dem Dokument DE 195 36 603 ist eine Airbagabdeckung für einen Airbag bekannt, die aus einem Polyethylen-Faservlies besteht. Airbagabdeckungen oder Airbagschutzhüllen sollen einerseits den Airbag vor Verschmutzungen und Beschädigungen schützen andererseits sollen sie die Entfaltung des Airbags in einer Unfallsituation nicht behindern sondern sogar eine bevorzugte Entfaltungscharakteristik unterstützen. Weiterhin soll die Airbagschutzhülle mit Warnhinweisen bedruckbar sein. Von der Automobilindustrie wird deshalb von der Zulieferindustrie ein Material gefordert, das hohe Festigkeiten und niedrige Dehnungswerte bei einer vergleichsweise hohen Weiterreißfestigkeit besitzt. Weiterhin soll das Material gut bedruckbar sein und den Anforderungen hinsichtlich der Flammschutzeigenschaften entsprechen. Insbesondere soll das für die Herstellung von Airbagschutzhüllen eingesetzte Material sehr eng tolerierte Reiß- und Weiterreißfestigkeiten besitzen. Außerdem werden hohe Anforderungen an die Dauertemperaturbeständigkeit, das Staubrückhaltevermögen sowie gleichzeitig an gute Luftdurchlässigkeit zur Vermeidung von Kondensationsproblemen gestellt.

Die Erfindung hat sich die Aufgabe gestellt, eine Airbagschutzhülle zu schaffen, die den genannten Forderungen entspricht.

Erfindungsgemäß wird die Aufgabe durch eine Airbagschutzhülle gelöst, welche aus einem Endlosfilament-Vliesstoff mit Flächengewichten von 60 bis 200g/m² besteht, wobei der Vliesstoff aus schmelzgesponnenen, verstreckten und unmittelbar zu einem Vlies abgelegten Endlosfilamenten mit einem Fasertiter von 1,5 bis 5 dtex, vorzugsweise von 2,4 bis 3 dtex, besteht und nach seiner Ablage einer anschließenden Verfestigung durch Hochdruck-Wasserstrahlen gegebenenfalls mit einer Vorverfestigung unterworfen wurde. Die isotrope Filamentverteilung im Vliesstoff macht ein Säumen und die Beachtung der Maschinenlaufrichtung beim Zuschnitt nicht erforderlich. Durch die endlosen Filamente weist die Airbagschutzhülle kein Ausfasern auf. Daneben besitzt die erfindungsgemäße Airbagschutzhülle ein sehr gutes Knickwinkel-Erholungsvermögen von > 120° und weist eine sehr gute Naht- und Fadenrutschfestigkeit von 200 N, gemessen nach der Norm BS 3320, auf.

Weiterhin weist das Material keinerlei abstehende Fasern und damit keine Neigung zum Pilling auf. Es besitzt darüber hinaus eine hohe Abrasionsfestigkeit und ist schweißbar, klebbar und nähbar.

Die Airbagschutzhülle besitzt eine hohe Festigkeit, eine niedrige Dehnbarkeit, eine hohe Dimensionsstabilität und vor allem eine sehr definierte Reißfestigkeit, wodurch in Verbindung mit der Einprägung von Aufreißlinien eine einstellbare Entfaltung des Airbags bei einer vorgegebenen Krafteinwirkung erfolgt. Die Weiterreißkraft beträgt 120 bis 200 N, gemessen nach der Norm DIN EN ISO 9073-4

Vorteilhafterweise wird die Verfestigung des Vliesstoffes dadurch erreicht, daß der gegebenenfalls vorverfestigte Vliesstoff mindestens einmal auf jeder seiner Seiten mit Hochdruck-Wasserstrahlen beaufschlagt wird. Die Airbagschutzhülle weist dadurch eine gute Oberfläche auf. Die Vorverfestigung erfolgt durch vorzugsweise durch Vernadelung.

Vorteilhafterweise wird die Airbagschutzhülle zur Erhöhung ihrer Festigkeit und Abriebbeständigkeit noch einer Punktkalandrierung unterzogen. Dazu wird der verfestigte Vliesstoff durch beheizte Walzen geführt, von denen mindestens eine Walze Erhebungen aufweist, die zu einem punktuellen Verschmelzen der Filamente untereinander führen. Neben der Punktkalandrierung kann die erfindungsgemäße Airbagschutzhülle auch einer Glattkalandrierung zur Erhöhung der Festigkeit, Bedruckbarkeit und Abriebbeständigkeit unterzogen werden. Dazu wird der verfestigte Vliesstoff durch beheizte Walzen geführt.

Vorzugsweise ist dem Polyester für die Airbagschutzhülle ein Additiv, wie Farbpigmente, permanent wirkende Antistatika, Flammschutzmittel und / oder die hydrophoben Eigenschaften beeinflussende Zusätze in Mengen bis zu 10 Gewichtsprozent, beigegeben.

### Beispiel 1

Aus Polyester-Endlosfilamenten mit einem Titer von 2,8 dtex wird ein Filamentvlies mit einem Flächengewicht von 120 g/m² erzeugt und einer Wasserstrahlverfestigung mit Drücken bis 230 bar beidseitig unterzogen. Der Vliesstoff weist nach der Wasserstrahlbehandlung und nach einer abschließenden Punktkalandrierung eine Dicke von 0,60 mm auf. Für die Reißfestigkeit in Maschinenlaufrichtung wurden 360 N und in Querrichtung 330 N ermittelt. Die Weiterreißfestigkeit betrug 166 / 151 N.

## Patentansprüche

1. Airbagschutzhülle aus einem Endlosfilament-Vliesstoff aus Polyester mit Flächengewichten von 60 bis 200 g/m², wobei der Vliesstoff aus schmelzgesponnenen, verstreckten und unmittelbar zu einem Vlies abgelegten Endlosfilamenten mit einem Faser-Titer von 1,5 bis 5 dtex, vorzugsweise von 2,4 bis 3 dtex, besteht, und nach seiner Ablage einer Verfestigung durch Hochdruck-Wasserstrahlen gegebenenfalls mit einer Vorverfestigung unterworfen wurde.

2. Airbagschutzhülle nach Anspruch 1, **dadurch gekennzeichnet, daß** die Verfestigung des Vliesstoffes dadurch erfolgt, daß der gegebenenfalls vorverfestigte Vliesstoff mindestens einmal von jeder Seite mit Hochdruck-Wasserstrahlen beaufschlagt wird.

3. Airbagschutzhülle nach einem der Ansprüche 1 oder 2, **dadurch gekennzeichnet, daß** der Vliesstoff nach seiner Verfestigung punkt- oder glattkalandriert ist.

4. Airbagschutzhülle nach einem der Ansprüche 1 bis 3, **dadurch gekennzeichnet, daß** das Polyester ein Additiv, wie Farbpigmente, permanent wirkende Antistatika, Flammschutzmittel und/oder die hydrophoben Eigenschaften beeinflussende Zusätze in Mengen bis zu 10 Gewichtsprozent, enthält.

5. Airbagschutzhülle nach Anspruch 4, **dadurch gekennzeichnet, daß** die Färbung der Endlosfilamente durch Spinnfärben vorgenommen wird.
